# EUROPEAN PATENT SPECIFICATION

(11) **EP 0 664 933 B1**
(45) Date of publication and mention of the grant of the patent: **16.06.1999**
(21) Application number: 93922114.9
(22) Date of filing: 29.09.1993
(51) Int. Cl.: H02H 3/16

(54) **SENSOR FOR REGISTRATION OF LEAK CURRENT**
SENSOR ZUR FEHLERSTROMERFASSUNG
DETECTEUR POUR L'ENREGISTREMENT DES COURANTS DE FUITE

(30) Priority: 30.09.1992 SE 9202822
(43) Date of publication of application: 02.08.1995
(73) Proprietor: AB VOLVO, 405 08 Göteborg (SE)
(72) Inventor: SVEDOFF, Göran, S-427 21 Billdal (SE)
(74) Representative: Roth, Ernst Adolf Michael
(86) International application number: SE9300779
(87) International publication number: WO9408380

(56) References cited:
- DE-B- 1 128 537
- DE-C- 2 546 997
- FR-A- 2 347 807
- US-A- 3 764 853
- FINK, D.G. & CHRISTIANSEN, D 'Electronics Engineer's Handbook, Third Edition', 1989, MCGRAW-HILL, US

## Description

### TECHNICAL AREA

The present invention refers to a sensor for registration of leak current between metal elements in the chassis or body of a vehicle and electric wires that run along said metal elements, the electric wiring having positive and negative poles, the sensor comprising at least one resistor bridge having a first branch and a second branch, said branches being coupled in parallel across the positive and negative poles of the electric wiring, the first branch including first and second resistors coupled in series and having a reference point between the first and second resistors, the second branch including third and fourth resistors coupled in series and having connection point between the third and fourth resistors, the metal elements being connected to said connection point, a first leak-current resistance existing in parallel with the third resistor between a pole of the electric wiring and the metal elements, a second leak-current resistance existing in parallel with the fourth resistor between a pole of the electric wiring and the metal elements, and a detection circuit coupled between the connection point and the reference point, the detection circuit having first and second output terminals.

### BACKGROUND OF THE INVENTION

In almost all electric vehicles there is electric energy which is classified within the concept high-tension current, which is considered as dangerous for man. For instance, electric vehicles occur with voltages up to 400 volts and currents of approximately 500 amperes.

Many electric vehicles work in a difficult environment with presence of moisture, dirt, dust and vibrations. If any leak current fault occurs in the electric vehicle's high-tension current system this can be very dangerous from the aspect of personal safety. Danger arises as soon someone touches a component (or moisture/fluid upon said component), e.g. by connection of mains current for charging of batteries or for service and inspection. If a fault already exists in some component a second fault can cause an explosion in batteries or other critical electric components. Just a minor collision can cause damage to the vehicle's cabling.

An earth fault breaker is used to detect a leak current between phase and earth by A.C.-apparatus, whereby the current is cut off as soon as a fault is detected. These devices are based on detection of a difference of current between conductor and reconductor and it is therefore not possible for these to be applied to electric vehicles where considerable parts of chassis and body consists of metal which can be electrically conducting.

DE-C-25 46 997 discloses a sensor for the detection of ground faults in non-earthed direct current networks. The sensor comprises a resistor bridge having first and second branches connected in parallel across the positive and negative poles of the network. The first branch includes first and second resistors R1, R2 connected in series with a reference point between them. The second branch is formed by the series arrangement of the two leakage resistances Rp, Rn between the respective positive and negative poles and earth. A detection circuit is coupled between earth and the reference point. The detection circuit includes a first terminal 14 and diode D5 which indicate when one pole is short circuited to ground and a second terminal 16 and diode D6 which indicate when the other pole is short circuited to ground.

In DE 1128537, which discloses features as defined in the preamble of claim 1, a bridge connection with resistors is described, where one of the resistors is located in a consumer, and in the case of several consumers, another resistor must be adjusted. The resistors are chosen such that the earth point and reference point are at the same potential when the earth connection is good. THE PURPOSE AND MOST IMPORTANT FEATURES OF THE INVENTION The purpose of the present invention is to achieve a efficient leak current-detector for electric vehicles.

This purpose is achieved with the invention because the first output terminal of the detection circuit is arranged for delivering an output signal indicating that the third resistor is short circuited, and the second output terminal of the detection circuit is arranged for delivering an output signal indicating that the fourth resistor is short circuited, and that the third and the fourth resistors each have an equal resistance value, which in view of a limit for leak-currents through each of the first and second leak-current resistances is so selected that the value is approximately five times higher than the resistance values of the first and second leak-current resistances for providing a desired detection level.

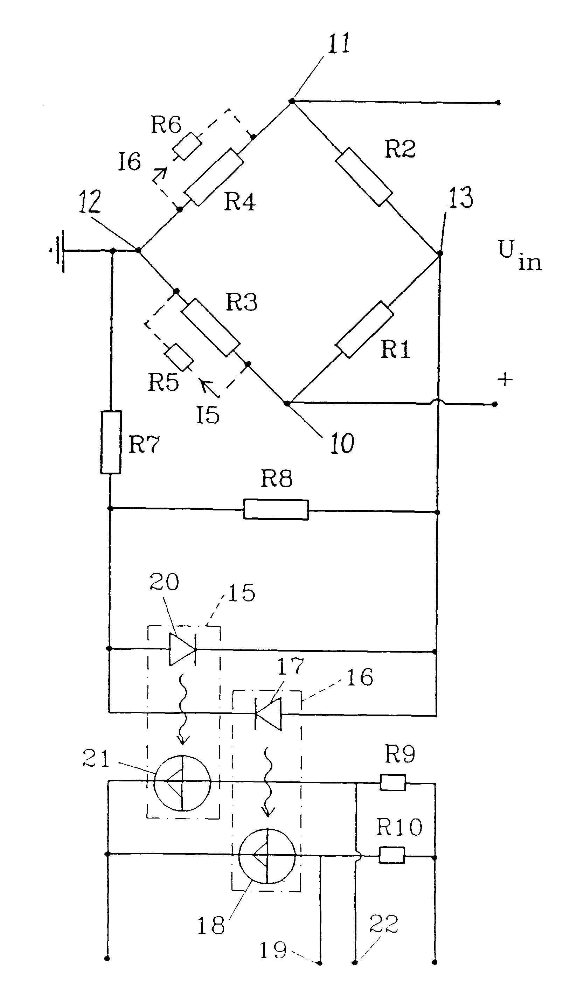

### DESCRIPTION OF THE FIGURE

The invention will be described herebelow with reference to the embodiment that is shown in the enclosed drawing.

### DESCRIPTION OF EMBODIMENT

The figure discloses a resistor bridge connection, with resistors R1, R2, R3 and R4 and resistances R5 and R6, that is connected between the positive and negative poles in a electric vehicle's cabling at the points 10 and 11, respectively. The point 12 is connected to the vehicle's body (point of electric earth), i.e. any voltage is balanced to the body. On the opposite side of the bridge the point 13 forms a point of reference and is equivalent to an artificial earth.

The resistors R3 and R4 have the same resistance, which should be chosen so that it is approximately five times higher than a chosen detection value for the leak current-resistances R5 and R6 (inversely proportional to the limit for the leak current I5 or I6).

The resistors R1 and R2 have the same resistance, which should be less than a fifth of the resistance for R3 and R4 where one must consider the power outlet.

A detection circuit is connected between the point of electric earth 12 and the point 13. The detection circuit includes the resistors R7, R8 and means 15, 16 for registration of leak current, which are exemplified by optoswitches, which are used for galvanic separated transfer of signals.

If for instance a short-circuit-fault (= the resistance R6) arises between the point of grounding 12 and the negative conductor to the point 11 the resistor R4 becomes short-circuited. Hereby occurs an imbalance in the resistor bridge connection and a current flow is formed through the resistor R3 and also parallel to this via the resistors R1, R2 and also parallel through the detection circuit's resistors R8, R7 and through a diode 17 arranged in the optoswitch 16. The diode 17 activates the optoswitch exit 18 which is connected with a secondary circuit and a output signal is received at 19. The output signal then controls a non shown device to interrupt the current quickly at the source of supply.

If on the other hand a short-circuit-fault (= resistance R5) arises between the point of grounding 12 and the positive conductor to the point 10 the resistor R3 becomes short-circuited. Hereby arises an imbalance on the other side of the resistor bridge connection and a current flow is formed trough the resistor R4 and parallel with this via the resistors R1, R2 and also parallel through the detection circuit's resistors R7, R8 and through the diode 20 arranged in the optoswitch 15. The diode 20 activates exit 21 on the optoswitch which is connected with the secondary circuit, and a output signal is received at 22. The output signal then controls the device so that the current is quickly interrupted at the source of supply.

As the secondary circuit has two exits 19, 22 one can receive information on which of the conductors the leak current appears.

In an arrangement adapted for 220 volt alternating current, which is not in accordance with the invention, the resistors R1, R2 each has a resistance of approximately 10 kΩ, the resistors R3, R4 each has a resistance of approximately 50 kΩ, the resistor R7 a resistance of approximately 100 Ω, the resistor R8 a resistance of approximately 500 Ω and the resistors R9, R10 each a resistance of approximately 10 kΩ. The values of detection for the resistances R5, R6 thereby amount to approximately 20-25 kΩ.

The invention is not limited to the above described embodiments, instead more variants are conceivable within the scope of the invention. For instance, the optoswitches can be replaced with suitable relays.

## Claims

1. A sensor for registration of leak current between metal elements (12) in the chassis or body of a vehicle and electric wires that run along said metal elements, the electric wiring having positive and negative poles, the sensor comprising
- at least one resistor bridge having a first branch and a second branch, said branches being coupled in parallel across the positive and negative poles (10, 11) of the electric wiring,
- the first branch including first and second resistors (R1, R2) coupled in series and having a reference point (13) between the first and second resistors,
- the second branch including third and fourth resistors (R3, R4) coupled in series and having connection point (12) between the third and fourth resistors (R3, R4), the metal elements being connected to said connection point,
- a first leak-current resistance (R5) existing in parallel with the third resistor (R3) between a pole of the electric wiring and the metal elements,
- a second leak-current resistance (R6) existing in parallel with the fourth resistor (R4) between a pole of the electric wiring and the metal elements, and
- a detection circuit (R7, R8, R9, R10, 15, 16) coupled between the connection point (12) and the reference point (13), the detection circuit having first and second output terminals (22, 19),
**characterized** in,
that the first output terminal (22) of the detection circuit is arranged for delivering an output signal indicating that the third resistor (R3) is short circuited, and the second output terminal (19) of the detection circuit is arranged for delivering an output signal indicating that the fourth resistor (R4) is short circuited, and
that the third and the fourth resistors (R3, R4) each have an equal resistance value, which in view of a limit for leak-currents (15, 16) through each of the first and second leak-current resistances (R5, R6) is so selected that the value is approximately five times higher than the resistance values of the first and second leak-current resistances (R5, R6) for providing a desired detection level.

2. A sensor according to claim 1,
**characterized** in that the first and second resistors (R1, R2) are equal and at least one fifth of the value of the third resistor (R3).

3. A sensor according to claim 1,
**characterized** in that the voltage of the positive and negative poles (10, 11) is balanced to the metal element (12) via the resistors (R3, R4) of the second pair of resistors, so that the voltage is halved.

4. A sensor according to claim 1,
**characterized** in that it includes means for quick interruption of the current via the electric wires.

## Patentansprüche

1. Sensor zur Fehlerstromerfassung zwischen Metallelementen (12) in dem Chassis oder Körper eines Fahrzeuges und elektrischen Drähten, die entlang der Metallelemente verlaufen, wobei die elektrische Verdrahtung einen positiven und einen negativen Pol hat, der Sensor mindestens eine Widerstandsbrücke mit einem ersten Zweig und einem zweiten Zweig aufweist, die in Parallelschaltung den positiven Pol (10) und den negativen Pol (11) der elektrischen Verdrahtung überbrücken, der erste Zweig einen ersten und einen zweiten Widerstand (R1, R2) hat, die in Reihe geschaltet sind und zwischen denen ein Bezugspunkt (13) liegt, der zweite Zweig einen dritten und einen vierten Widerstand (R3, R4) hat, die in Reihe geschaltet sind und zwischen denen ein Verbindungspunkt (12) liegt, an den die Metallelemente angeschlossen sind, ein erster Fehlerstromwiderstand (R5) parallel zu dem dritten Widerstand (R3) zwischen einem Pol der elektrischen Verdrahtung und den Metallelementen geschaltet ist, ein zweiter Fehlerstromwiderstand (R6) parallel zu dem vierten Widerstand (R4) zwischen einem Pol der elektrischen Verdrahtung und den Metallelementen geschaltet ist und eine Anzeigeschaltung (R7, R8, R9, R10, 15, 16) zwischen dem Verbindungspunkt (12) und dem Bezugspunkt (13) geschaltet ist, die einen ersten Ausgangsanschluss (22) und einen zweiten Ausgangsanschluss (19) hat,
**dadurch gekennzeichnet,**
daß der erste Ausgangsanschluss (22) der Anzeigeschaltung zur Abgabe eines Ausgangssignals vorgesehen ist, das anzeigt, daß der dritte Widerstand (R3) kurzgeschlossen ist und der zweite Ausgangsanschluss (19) der Anzeigeschaltung zur Abgabe eines Ausgangssignals vorgesehen ist, das anzeigt, daß der vierte Widerstand (R4) kurzgeschlossen ist, und daß der dritte Widerstand (R3) und der vierte Widerstand (R4) jeweils den gleichen Widerstandswert haben, der angesichts einer Grenze für die Fehlerströme (15, 16) durch den ersten Ableitungswiderstand (R5) und durch den zweiten Ableitungswiderstand (R6) so gewählt ist, daß der Wert etwa fünfmal größer ist als die Widerstandswerte des ersten und des zweiten Ableitungswiderstandes (R5, R6), um den gewünschten Anzeigepegel zu erhalten.

2. Sensor nach Anspruch 1,
**dadurch gekennzeichnet,**
daß der erste Widerstand (R1) und der zweite Widerstand (R2) gleich groß sind und mindestens ein Fünftel des Wertes des dritten Widerstandes (R3) haben.

3. Sensor nach Anspruch 1,
**dadurch gekennzeichnet,**
daß der positive Pol (10) und der negative Pol (11) gegenüber dem Metallelement (12) über die Widerstände (R3, R4) des zweiten Paars Widerstände derart abgeglichen sind, daß die Spannung halbiert wird.

4. Sensor nach Anspruch 1,
**dadurch gekennzeichnet,**
daß er eine Einrichtung zur schnellen Unterbrechung des Stromes durch die elektrischen Drähte aufweist.

## Revendications

1. Capteur pour l'enregistrement des courants de fuite entre des éléments métalliques (12) dans le châssis ou la carrosserie d'un véhicule et des câbles électriques posés le long desdits éléments métalliques, le câblage électrique présentant un pôle positif et un pôle négatif, le capteur comprenant
- au moins un pont de résistances avec une première et une seconde branche, lesdites branches étant montées en parallèles entre les pôles positif et négatif (10, 11) du câblage électrique,
- la première branche comprenant une première et une seconde résistance (R1, R2) montées en série et ayant un point de référence (13) entre la première et la seconde résistance,
- la seconde branche comprenant une troisième et une quatrième résistance (R3, R4) montées en série et ayant un point de connexion (12) entre la troisième et la quatrième résistance (R3, R4), les éléments métalliques étant raccordés audit point de connexion,
- une première résistance de fuite (R5) étant montée en parallèle avec la troisième résistance (R3) entre un pôle du câblage électrique et les éléments métalliques,
- une seconde résistance de fuite (R6) étant montée en parallèle avec la quatrième résistance (R4) entre un pôle du câblage électrique et les éléments métalliques,
- un circuit de détection (R7, R8, R9, R10, 15, 16) raccordé au niveau du point de connexion (12) et du point de référence (13), le circuit de détection ayant une première et une seconde borne de sortie (22, 19), caractérisé
en ce que la première borne de sortie (22) du circuit de détection est agencée pour délivrer un signal de sortie indiquant que la troisième résistance (R3) est court-circuitée et en ce que la seconde borne de sortie (19) du circuit de détection est agencée pour délivrer un signal de sortie indiquant que la quatrième résistance (R4) est court-circuitée, et
en ce que la troisième et la quatrième résistance (R3, R4) ont une valeur de résistance identique qui est sélectionnée, en fonction d'une limite de courants de fuite (15, 16) traversant chacune desdites première et seconde résistances de fuite (R5, R6), de telle sorte que la valeur soit environ cinq fois supérieure aux valeurs de résistance des première et seconde résistances de fuite (R5, R6) pour fournir le niveau de détection souhaité.

2. Capteur selon la revendication 1, caractérisé en ce que la première et la seconde résistance (R1, R2) sont identiques et égales à au moins un cinquième de la valeur de la troisième résistance (R3).

3. Capteur selon la revendication 1, caractérisé en ce que la tension aux pôles positif et négatif (10, 11) est équilibrée par rapport à l'élément métallique (12) via les résistances (R3, R4) de la seconde paire de résistances, de sorte que la tension est divisée en deux.

4. Capteur selon la revendication 1, caractérisé en ce qu'il comprend un moyen de coupure rapide du courant traversant les câbles électriques.
